# EUROPÄISCHE PATENTSCHRIFT

(11) **EP 2 788 391 B1**
(45) Veröffentlichungstag und Bekanntmachung des Hinweises auf die Patenterteilung: **07.10.2015**
(21) Anmeldenummer: 12791751.6
(22) Anmeldetag: 21.11.2012
(51) Int. Cl.: C08F 6/14, C08F 6/24, C08K 5/32, C08L 23/08

(54) **VERFAHREN ZUR REDUKTION DES GEHALTS AN FORMALDEHYD IN WÄSSRIGEN POLYMERDISPERSIONEN MIT LATENT FORMALDEHYD FREISETZENDEN BESTANDTEILEN**
METHOD FOR REDUCING THE CONTENT OF FORMALDEHYDE IN AQUEOUS POLYMER DISPERSIONS WITH COMPONENTS WHICH LATENTLY RELEASE FORMALDEHYDE
PROCÉDÉ DE RÉDUCTION DE LA TENEUR EN FORMALDÉHYDE DE DISPERSIONS AQUEUSES DE POLYMÈRES CONTENANT DES CONSTITUANTS SUSCEPTIBLES DE LIBÉRER DU FORMALDÉHYDE

(30) Priorität: 09.12.2011 DE 102011088094
(43) Veröffentlichungstag der Anmeldung: 15.10.2014
(73) Patentinhaber: Wacker Chemie AG, 81737 München (DE)
(72) Erfinder: KOTSCHI, Udo, 84489 Burghausen (DE)
(74) Vertreter: Schuderer, Michael
(86) Internationale Anmeldenummer: PCT/EP2012/073170
(87) Internationale Veröffentlichungsnummer: WO 2013/083402

(56) Entgegenhaltungen:
- EP-A1- 1 961 792
- EP-A2- 0 647 658
- KAI-UWE SCHOENING ET AL: "Synthetic Studies on N -Alkoxyamines: A Mild and Broadly Applicable Route Starting from Nitroxide Radicals and Aldehydes", THE JOURNAL OF ORGANIC CHEMISTRY, Bd. 74, Nr. 4, 20. Februar 2009 (2009-02-20), Seiten 1567-1573, XP055052748, ISSN: 0022-3263, DOI: 10.1021/jo802403j

## Beschreibung

Die Erfindung betrifft ein Verfahren zur Reduktion des Gehalts an Formaldehyd in wässrigen Polymerdispersionen mit latent Formaldehyd freisetzenden Bestandteilen, mittels dieses Verfahrens ausgerüstete wässrige Polymerdispersionen und deren Verwendung.

Wässrige Polymerdispersionen von Polymerisaten von ethylenisch ungesättigten Monomeren werden insbesondere als Bindemittel für Farben und Putze oder als Bindemittel in Klebstoffen, beispielsweise zur Verklebung von Papier oder Holz oder zur Bindung von Nonwoven-Materialien eingesetzt. Derartige wässrige Polymerdispersionen können Formaldehyd enthalten, welcher aus unterschiedlichen Quellen stammen kann. Aufgrund des erhöhten Umweltbewußtseins aber auch aufgrund strengerer Normen werden zunehmend "Formaldehyd-freie" wässrige Polymerdispersionen verlangt, das heißt wässrige Polymerdispersionen, welche selbst als "Formaldehyd-frei" klassifiziert werden können, oder wässrige Polymerdispersionen mit denen bei deren Applikation die Freisetzung von Formaldehyd weitgehend verhindert wird. Als "Formaldehyd-frei" gelten im Allgemeinen wässrige Polymerdispersionen deren Gehalt an Formaldehyd ≤ 10 Gewichts-ppm beträgt. Für Anstrichfarben wird beispielsweise mittels Umweltzeichen wie EU-Eco-Label der Gehalt an Formaldehyd in der Farbe auf ≤ 10 Gewichts-ppm limitiert.

Der Gehalt an Formaldehyd in wässrigen Polymerdispersionen kann auf verschiedene Ursachen zurückgeführt werden. Häufig werden wässrige Polymerdispersion unter Einsatz von Redoxinitiatorkombinationen hergestellt, welche eine Formaldehyd freisetzende, reduzierende Komponente wie Natriumformaldehydsulfoxylat enthalten. Dazu wird in der EP 647658 A2, zur Reduzierung des Formaldehydanteils aus dieser Quelle, die Zugabe von Harnstoff als Formaldehyd-Fänger zur Polymerdispersion empfohlen. In der EP 596318 A2 wird empfohlen zu Natriumformaldehydsulfoxylat alternative Reduktionsmittel wie Ascorbinsäure zur Initiierung der Polymerisation einzusetzen.

Formaldehyd wird auch in wässrigen Polymerdispersionen freigesetzt, welche N-Methylolfunktionelle Polymerisate enthalten, und welche beispielsweise als vernetzende Bindemittel zur Bindung von Nonwovens eingesetzt werden. In der US 5,143,954 wird empfohlen, den bei der Vernetzung freiwerdenden Formaldehyd mit einpolymerisierbaren Harnstoffderivaten abzufangen. In der EP 534307 A2 wird beschrieben anstelle von N-Methylolacrylamid als nachvernetzende Comonomereinheiten N-Allyl-N-Dialkoxyethylamide zu copolymerisieren.

Zur Verminderung des Formaldehydgehalts in der Raumluft in Innenräumen werden den Gipsmörteln in der WO 2011/058172 A1 Ethylenharnstoff-Natriumpyrosulfit oder Gerbsäure-Verbindungen zugegeben.

Insbesondere als Bindemittel für emissionsarme Innenfarben haben sich in letzter Zeit wässrige Polymerdispersionen etabliert, welche Copolymerisate mit hydrolysierbaren Methoxysilangruppen enthalten. Bei derartigen Polymerdispersionen kann bei längerer Lagerzeit ebenfalls ein Anstieg des Formaldehydgehaltes festgestellt werden. Ein Anstieg des Formaldehyd-Gehaltes ist auch in wässrigen Polymerdispersionen zu beobachten, welche Polyvinylalkohol als Schutzkolloid enthalten oder welche Emulgatoren mit Ethylenoxidgruppen enthalten.

In der EP 1961792 A1 wird ein Verfahren zur Geruchsminimierung in Dispersionsfarben empfohlen, wobei ein Stabilisator aus der Gruppe umfassend 4-Hydroxy-2,2,6,6-tetramethylpiperidinoxyl (4-OH-TEMPO), gehinderte Phenole und gehinderte Amine in Kombination mit einem Biozid auf Basis einer Isothiazolon-Verbindung eingesetzt wird. 4-OH-TEMPO wird in der US 6,437,020 zur Stabilisierung von Polyurethanverdickern empfohlen. In der WO 2010/071727 A1 wird TEMPO als Additiv zur Steuerung der Vernetzungsreaktion in wärmehärtenden Harzlösungen verwendet. In der WO 1998/023649 A1 wird zur Verhinderung von Belägen an der Reaktoroberfläche die Polymerisation von vinylischen Monomeren in wässriger Phase in Gegenwart einer N-Oxyl-Verbindung durchgeführt.

Der Erfindung lag die Aufgabe zugrunde ein Verfahren zur Verfügung zu stellen, mit welchem sich der Formaldehyd-Gehalt in wässrigen Polymerdispersionen mit latent Formaldehyd freisetzenden Bestandteilen wirksam reduzieren lässt, das heißt mit welchem der Anstieg des Formaldehyd-Gehalts (die Freisetzung von Formaldehyd) bei der Lagerung der wässrigen Polymerdispersionen oder der Lagerung von mit dem wässrigen Poylmerdispersionen hergestellten Produkten vermindert oder vermieden werden kann.

Gegenstand der Erfindung ist ein Verfahren zur Reduktion des Gehalts an Formaldehyd in wässrigen Dispersionen von Polymerisaten von ethylenisch ungesättigten Monomeren (wässrige Polymerdispersionen) mit latent Formaldehyd freisetzenden Bestandteilen, dadurch gekennzeichnet, dass zu den wässrigen Polymerdispersionen ein oder mehrere N-Oxyl-Verbindungen zugegeben werden.

Wässrige Polymerdispersionen mit latent Formaldehyd freisetzenden Bestandteilen sind insbesondere solche aus der Gruppe umfassend wässrige Polymerdispersionen, welche mittels Copolymerisation mit hydrolysierbaren Methoxysilangruppen enthaltenden Comonomeren erhalten werden, und/oder welche Polyvinylalkohol enthalten und/oder welche Emulgatoren mit Ethylenoxidgruppen enthalten.

Bevorzugt werden als N-Oxyl-Verbindungen solche auf Basis von sekundären Aminen, in denen die N-Oxyl-Gruppe Bestandteil eines gesättigten oder ungesättigten fünfgliedrigen Ringes, beispielsweise Pyrrolidin-1-Oxyl-Verbindungen oder 3-Azacyclopentyl-3-oxyl-Verbindungen, oder eines gesättigten oder ungesättigten sechsgliedrigen Ringes, beispielsweise Piperidin-1-Oxylverbindungen oder Pyridin-1-Oxyl-Verbindungen oder 1,4-Diazacyclohexyl-1,4-dioxyl-Verbindungen oder 1,4-Diazacyclohexenyl-1,4-dioxyl-Verbindungen ist, und bei denen die der N-Oxyl-Gruppe benachbarten C-Atome jeweils zwei C₁- bis C₄-Alkylgruppen, vorzugsweise Methylgruppen, tragen.

Besonders bevorzugt werden als 5-Ring-N-Oxyl-Verbindungen 2,2,5,5-Tetramethylpyrrolidinyloxyl; 3-Amino-2,2,5,5-tetramethylpyrrolidinyloxyl; 2,2,4,4-Tetramethyl-1-oxa-3-azacyclopentyl-3-oxyl; 2,2,4,4-Tetramethyl-1-oxa-3-pyrrolinyl-1-oxy-3-carbonsäure. Besonders bevorzugt werden als 6-Ring-N-Oxyl-Verbindungen 2,2,6,6-Tetramethylpiperidinyloxyl; 4-Amino-2,2,6,6-tetramethylpiperidinyloxyl; 4-Hydroxy-2,2,6,6-tetramethylpiperidinyloxyl; 4-Oxo-2,2,6,6-tetramethylpiperidinyloxyl.

Am meisten bevorzugt werden 2,2,6,6-Tetramethylpiperidinyloxyl (TEMPO) und 4-Hydroxy-2,2,6,6-tetramethylpiperidinyloxyl (4-OH-TEMPO).

Die genannten N-Oxyl-Verbindungen sind im Handel erhältlich oder mit dem Fachmann bekannten Verfahren herstellbar.

Die Zugabemenge an N-Oxyl-Verbindung hängt vom Anteil der latent Formaldehyd-freisetzenden Bestandteile in der Polymerdispersion ab und vom angestrebten Formaldehydgehalt nach der erfindungsgemäßen Behandlung ab. Die N-Oxyl-Verbindungen werden im Allgemeinen in einer Menge von 5 bis 1000 Gewichts-ppm, vorzugsweise 10 bis 500 Gewichts-ppm, besonders bevorzugt 50 bis 500 Gewichts-ppm, am meisten bevorzugt 50 bis 100 Gewichts-ppm der wässrigen Polymerdispersion zugegeben, jeweils bezogen auf das Gewicht der Polymerdispersion. Der Formaldehydgehalt der erfindungsgemäß behandelten wässrigen Polymerdispersionen beträgt vorzugsweise ≤ 20 Gewichts-ppm, besonders bevorzugt ≤ 10 Gewichts-ppm, jeweils bezogen auf das Gewicht der Polymerdispersion.

Die Zugabe der N-Oxyl-Verbindung kann nach Abschluß der Polymerisation zur fertigen Polymerdispersion erfolgen. Die Zugabe der N-Oxyl-Verbindung kann auch beim Abmischen der Polymerdispersion in Rezepturen für den beabsichtigten Verwendungszweck erfolgen. Beispielsweise kann man dazu so vorgehen, dass man die N-Oxyl-Verbindung mit Rezepturbestandteilen anteigt und diese Anteigung zur Polymerdispersion hinzufügt.

Die wässrigen Polymerdispersionen sind solche, welche Polymerisate enthalten, die mittels radikalisch initiierter Polymerisation in wässrigem Medium von einem oder mehreren ethylenisch ungesättigten Monomeren ausgewählt aus der Gruppe umfassend Vinylester von Carbonsäuren mit 1 bis 15 C-Atomen, Methacrylsäureester und Acrylsäureester von Carbonsäuren mit unverzweigten oder verzweigten Alkoholen mit 1 bis 15 C-Atomen, Olefine und Diene, Vinylaromaten und Vinylhalogenide erhalten werden.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9^{R} oder VeoVa10^{R} (Handelsnamen der Firma Momentive). Besonders bevorzugt ist Vinylacetat.

Bevorzugte Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein bevorzugtes Vinylhalogenid ist Vinylchlorid. Gegebenenfalls können noch 0,05 bis 20 Gew.-%, vorzugsweise 1 bis 10 Gew.-%, bezogen auf das Gesamtgewicht des Polymerisats, funktionalisierte Comonomere copolymerisiert werden, welche als funktionelle Gruppen ein oder mehrere Carbonsäuregruppen, Carbonsäureamidgruppen, Sulfonsäuregruppen, N-Methylolamidgruppen, Silangruppen oder Epoxidgruppen enthalten. Beispiele für Hilfsmonomere sind ethylenisch ungesättigte Mono- und Dicarbonsäuren wie Acrylsäure oder Methacrylsäure, ethylenisch ungesättigte Carbonsäureamide wie Acrylamid oder Methacrylamid, ethylenisch ungesättigte Sulfonsäuren bzw. deren Salze wie Vinylsulfonsäure oder Vinylsulfonat, vorvernetzende Comonomere wie mehrfach ethylenisch ungesättigte Comonomere wie Triallylcyanurat, nachvernetzende Comonomere wie N-Methylolacrylamid oder N-Methylolacrylamid sowie deren Ether, epoxidfunktionelle Comonomere wie Glycidylmethacrylat oder Glycidylacrylat, silanfunktionelle Comonomere der allgemeinen Formel RSi(CH₃)₀₋₂(OR¹)₃₋₁, wobei R die Bedeutung CH₂=CR²-(CH₂)₀₋₁ oder CH₂=CR²CO₂(CH₂)₁₋₃ hat, R¹ ein unverzweigter oder verzweigter, gegebenenfalls substituierter Alkylrest mit 1 bis 12 C-Atomen ist, der gegebenenfalls durch eine Ethergruppe unterbrochensein kann und R² für H oder CH₃ steht, beispielsweise Vinyltrimethoxysilan, Vinyltriethoxysilan, 3-Methacryloxypropyltrimethoxysilan.

Bevorzugte Polymerisate sind solche, welche erhalten werden durch Polymerisation von Vinylacetat, von Vinylacetat und Ethylen, von Vinylacetat und Ethylen und einem oder mehreren weiteren Vinylestern, von Vinylacetat und einem oder mehreren weiteren Vinylestern, von Vinylacetat und Ethylen und (Meth)acrylsäureester, von Vinylacetat und Ethylen und Vinylchlorid, von Vinylacetat und einem oder mehreren weiteren Vinylestern und (Meth)acrylsäureester, von Vinylchlorid und Ethylen und gegebenenfalls einem oder mehreren weiteren Vinylestern, von Styrol und (Meth)acrylsäureester, wobei gegebenenfalls jeweils noch die genannten funktionalisierten Comonomere, gegebenenfalls auch Methoxysilan-funktionelle Comonomere in den genannten Mengen copolymerisiert werden können.

Besonders bevorzugt werden Polymerisate, welche erhalten werden mittels Polymerisation
von Vinylacetat;
von Vinylacetat und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R};
von Vinylacetat und 1 bis 40 Gew.-% Ethylen;
von Vinylacetat und 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, Veo-Val1^{R};
von Vinylacetat und 1 bis 40 Gew.-% Ethylen und vorzugsweise 1 bis 60 Gew.-% (Meth)-Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat;
von 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% (Meth)Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat, und gegebenenfalls noch 1 bis 40 Gew.-% Ethylen;
von einem oder mehreren Vinylestern mit 1 bis 12 C-Atomen im Carbonsäurerest wie Vinylacetat, Vinylpropionat, Vinyllaurat, und Vinylester von alpha-verzweigten Carbonsäuren mit 5 bis 13 C-Atomen wie VeoVa9^{R}, VeoVa10^{R}, VeoVa11^{R}, und 1 bis 40 Gew.-% Ethylen und 1 bis 60 Gew.-% Vinylchlorid;
wobei gegebenenfalls jeweils noch die genannten funktionalisierten Comonomere in den genannten Mengen, gegebenenfalls auch Methoxysilan-funktionelle Comonomere copolymerisiert werden können, und sich die Angaben in Gew.-% auf jeweils 100 Gew.-% aufaddieren, gegebenenfalls unter Berücksichtigung des Anteils an Methoxysilan-funktionellen Comonomeren.

Die Problematik der Freisetzung von Formaldehyd tritt insbesondere dann auf, wenn die wässrigen Dispersionen der obengenannten Polymerisate als latent Formaldehyd freisetzende Bestandteile Comonomereinheiten enthalten, welche sich von Methoxysilan-funktionellen Comonomeren ableiten, und/oder Polyvinylalkohole und/oder Emulgatoren mit Ethylenoxid-Gruppen enthalten.

Die Methoxysilan-funktionellen Comonomere sind ethylenisch ungesättigte, hydrolysierbare Silanverbindungen der allgemeinen Formel RSi(CH₃)₀₋₂(OCH₃)₁₋₃, wobei R die Bedeutung CH₂=CR¹-(CH₂)₀₋₁ oder CH₂=CR¹CO₂(CH₂)₁₋₃ hat, und R¹ für H oder CH₃ steht. Beispiele hierfür sind Vinyltrimethoxysilan, Vinylmethyldimethoxysilan, 3-Methacryloxypropyltrimethoxysilan. Im Allgemeinen werden Methoxysilan-funktionelle Comonomere mit einem Anteil von 0,05 bis 5 Gew.-%, vorzugsweise 0,1 bis 1,0 Gew.-% copolymerisiert.

Die Freisetzung von Formaldehyd ist im Falle dieser Copolymerisate vermutlich auf die Hydrolyse der Methoxygruppe zurückzuführen.

Die Herstellung der wässrigen Polymerdispersionen erfolgt vorzugsweise nach dem Emulsionspolymerisationsverfahren. Die Polymerisationstemperatur ist vorzugsweise zwischen 40°C und 100°C, besonders bevorzugt zwischen 60°C und 90°C. Bei der Copolymerisation von gasförmigen Comonomeren wie Ethylen oder Vinylchlorid kann auch unter Druck, im Allgemeinen zwischen 5 bar und 100 bar, gearbeitet werden. Die Initiierung der Polymerisation erfolgt vorzugsweise mit den für die Emulsionspolymerisation gebräuchlichen wasserlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, Azobisisobutyronitril. Zur Stabilisierung werden im Allgemeinen während der Polymerisation Schutzkolloide und/oder Emulgatoren zugegeben. Im Allgemeinen werden 1 bis 10 Gew.-% Schutzkolloid und/oder 1 bis 10 Gew.-% Emulgator zugegeben, jeweils bezogen auf das Gesamtgewicht der Monomere.

Geeignete Schutzkolloide für die Polymerisation sind beispielsweise Polyvinylalkohole; Polyvinylacetale; Polyvinylpyrrolidone; Polysaccharide in wasserlöslicher Form wie Stärken. Bevorzugte Polyvinylalkohole sind teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugte Polyvinylalkohole sind auch hydrophob modifizierte Polyvinylalkohole, vorzugsweise mit einem Hydrolysegrad von 80 bis 100 Mol-% und einer Höpplerviskosität, in 4 %-iger wässriger Lösung von 1 bis 30 mPas. Beispiele für hydrophob modifizierte Polyvinylalkohole sind verseifte Copolymerisate von Vinylacetat mit hydrophoben Comonomeren wie Isopropenylacetat oder Ethylen.

Die Problematik der Freisetzung von Formaldehyd tritt insbesondere dann auf, wenn als Schutzkolloid die genannten, gegebenenfalls hydrophob modifizierten, Polyvinylalkohole eingesetzt werden.

Zur Stabilisierung geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Problematik der Freisetzung von Formaldehyd tritt insbesondere dann auf, wenn als Emulgatoren Emulgatoren mit Ethylenoxid-Einheiten eingesetzt werden.

Beispiele für Emulgatoren mit Ethylenoxid-Einheiten sind ethoxylierte Fettalkohole, vorzugsweise mit einem Ethoxylierungsgrad von 3 bis 80 Ethylenoxid-Einheiten und C₈- bis C₃₆-Alkylresten,oder C₁₃-C₁₅-Oxoalkoholethoxylate mit einem Ethoxylierungsgrad von 3 bis 30 Ethylenoxid-Einheiten, oder C₁₆-C₁₈-Fettalkoholethoxylate mit einem Ethoxylierungsgrad von 11 bis 80 Ethylenoxid-Einheiten, oder C₁₀-Oxoalkoholethoxylate mit einem Ethoxylierungsgrad von 3 bis 11 Ethylenoxid-Einheiten, oder C₁₃-Oxoalkoholethoxylate mit einem Ethoxylierungsgrad von 3 bis 20 Ethylenoxid-Einheiten, oder Polyoxyethylensorbitanmonooleat mit 20 Ethylenoxidgruppen, Copolymere aus Ethylenoxyd und Propylenoxyd mit einem Mindestgehalt von im Allgemeinen 10 Gew.-% Ethylenoxid, Polyethylenoxid-Ether von Oleylalkohol mit einem Ethoxylierungsgrad von 4 bis 20 Ethylenoxid-Einheiten sowie die Polyethylenoxid-Ether von Nonylphenol mit einem Ethoxylierungsgrad von 4 bis 20 Ethylenoxid-Einheiten.

Das erfindungsgemäße Verfahren eignet sich insbesondere zur Reduzierung des Formaldehydgehaltes in wässrigen Polymerdispersionen von Copolymerisaten, welche mittels Emulsionspolymerisation von 78 bis 95 Gew.-% Vinylacetat, 5 bis 20 Gew.-% Ethylen, 0,1 bis 1,0 Gew.-% von einem oder mehreren ethylenisch ungesättigten, hydrolysierbaren Silanverbindungen der allgemeinen Formel RSi(CH₃)₀₋₂(OCH₃)₁₋₃, wobei R die Bedeutung CH₂=CR¹-(CH₂)₀₋₁ oder CH₂=CR¹CO₂(CH₂)₁₋₃ hat, und R¹ für H oder CH₃ steht, und gegebenenfalls 0,1 bis 1,0 Gew.-% epoxidfunktionelle Comonomere wie Glycidylmethacrylat oder Glycidylacrylat, sowie gegebenenfalls weiterer funktioneller Comonomere erhalten werden, wobei sich die Angaben in Gew.-% jeweils auf 100 Gew.-% aufaddieren, gegebenenfalls unter Berücksichtigung des Anteils an funktionellen Comonomeren.

Das erfindungsgemäße Verfahren eignet sich insbesondere auch zur Reduzierung des Formaldehydgehaltes in wässrigen Polymerdispersionen von Polymerisaten, welche mittels Emulsionspolymerisation von 60 bis 100 Gew.-% Vinylacetat und 0 bis 40 Gew.-% Ethylen, sowie gegebenenfalls weiterer funktioneller Comonomere, gegebenenfalls auch Methoxysilan-funktioneller Comonomere erhalten werden (wobei sich die Angaben in Gew.-% jeweils auf 100 Gew.-% aufaddieren), und welche einen oder mehrere Polyvinylalkohole enthalten, gegebenenfalls in Kombination mit einem oder mehreren Emulgatoren, beispielsweise Emulgatoren mit Ethylenoxid-Einheiten.

Das erfindungsgemäße Verfahren eignet sich insbesondere auch zur Reduzierung des Formaldehydgehaltes in wässrigen Polymerdispersionen von Polymerisaten, welche mittels Emulsionspolymerisation von 1 bis 60 Gew.-% Vinylchlorid, 1 bis 40 Gew.-% Ethylen, 1 bis 50 Gew.-% von einem oder mehreren weiteren Comonomeren aus der Gruppe der Vinylester mit 1 bis 12 C-Atomen im Carbonsäurerest wie Vinylacetat, Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}, sowie gegebenenfalls weiterer funktioneller Comonomere, gegebenenfalls auch Methoxysilan-funktioneller Comonomere (wobei sich die Angaben in Gew.-% jeweils auf 100 Gew.-% aufaddieren) erhalten werden, und welche einen oder mehrere Polyvinylalkohole enthalten, gegebenenfalls in Kombination mit einem oder mehreren Emulgatoren, beispielsweise Emulgatoren mit Ethylenoxid-Einheiten.

Das erfindungsgemäße Verfahren eignet sich insbesondere auch zur Reduzierung des Formaldehydgehaltes in wässrigen Polymerdispersionen von Polymerisaten, welche mittels Emulsionspolymerisation von 1 bis 60 Gew.-% Vinylacetat und 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}, sowie gegebenenfalls weiterer funktioneller Comonomere, gegebenenfalls auch Methoxysilan-funktioneller Comonomere erhalten werden (wobei sich die Angaben in Gew.-% jeweils auf 100 Gew.-% aufaddieren), und welche einen oder mehrere Polyvinylalkohole enthalten, gegebenenfalls in Kombination mit einem oder mehreren Emulgatoren, beispielsweise Emulgatoren mit Ethylenoxid-Einheiten.

Das erfindungsgemäße Verfahren eignet sich insbesondere auch zur Reduzierung des Formaldehydgehaltes in wässrigen Polymerdispersionen von Polymerisaten, welche mittels Emulsionspolymerisation von von 60 bis 100 Gew.-% Vinylacetat und 0 bis 40 Gew.-% Ethylen, sowie gegebenenfalls weiterer funktioneller Comonomere, gegebenenfalls auch Methoxysilan-funktionelle Comonomere erhalten werden (wobei sich die Angaben in Gew.-% jeweils auf 100 Gew.-% aufaddieren), und welche mindestens einen Emulgator mit Ethylenoxid-Einheiten enthalten, gegebenenfalls in Kombination mit einem oder mehreren Schutzkolloiden, beispielsweise Polyvinylalkohol.

Das erfindungsgemäße Verfahren eignet sich insbesondere auch zur Reduzierung des Formaldehydgehaltes in wässrigen Polymerdispersionen von Polymerisaten, welche mittels Emulsionspolymerisation von 1 bis 60 Gew.-% Vinylchlorid, 1 bis 40 Gew.-% Ethylen, 1 bis 50 Gew.-% von einem oder mehreren weiteren Comonomeren aus der Gruppe der Vinylester mit 1 bis 12 C-Atomen im Carbonsäurerest wie Vinylacetat, Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}, sowie gegebenenfalls weiterer funktioneller Comonomere, gegebenenfalls auch Methoxysilan-funktioneller Comonomere (wobei sich die Angaben in Gew.-% jeweils auf 100 Gew.-% aufaddieren) erhalten werden, und welche mindestens einen Emulgator mit Ethylenoxid-Einheiten enthalten, gegebenenfalls in Kombination mit einem oder mehreren Schutzkolloiden, beispielsweise Polyvinylalkohol.

Das erfindungsgemäße Verfahren eignet sich insbesondere auch zur Reduzierung des Formaldehydgehaltes in wässrigen Polymerdispersionen von Polymerisaten, welche mittels Emulsionspolymerisation von 1 bis 60 Gew.-% Vinylacetat und 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}, sowie gegebenenfalls weiterer funktioneller Comonomere, gegebenenfalls auch Methoxysilan-funktioneller Comonomere erhalten werden (wobei sich die Angaben in Gew.-% jeweils auf 100 Gew.-% aufaddieren), und welche mindestens einen Emulgator mit Ethylenoxid-Einheiten enthalten, gegebenenfalls in Kombination mit einem oder mehreren Schutzkolloiden, beispielsweise Polyvinylalkohol.

Das erfindungsgemäße Verfahren eignet sich insbesondere auch zur Reduzierung des Formaldehydgehaltes in wässrigen Polymerdispersionen von Polymerisaten, welche mittels Emulsionspolymerisation von 50 bis 100 Gew.-% eines oder mehrerer (Meth)acrylsäurester wie Methylmethacrylat, Methylacrylat, Ethylacrylat, n-Butylacrylat oder 2-Ethylhexylacrylat, und 0 bis 50 Gew.-% Styrol, sowie gegebenenfalls weiterer funktioneller Comonomere, gegebenenfalls auch Methoxysilan-funktionelle Comonomere erhalten werden (wobei sich die Angaben in Gew.-% jeweils auf 100 Gew.-% aufaddieren), und welche mindestens einen Emulgator mit Ethylenoxid-Einheiten enthalten, gegebenenfalls in Kombination mit einem oder mehreren Schutzkolloiden, beispielsweise Polyvinylalkohol, oder welche einen oder mehrere Polyvinylalkohole enthalten, gegebenenfalls in Kombination mit einem oder mehreren Emulgatoren, beispielsweise Emulgatoren mit Ethylenoxid-Einheiten.
Die mit dem erfindungsgemäßen Verfahren erhaltenen wässrigen Polymerdispersionen eignen sich zur Anwendung in Klebemitteln und Beschichtungsmitteln. Beispielsweise für die Verklebung oder Bindung unterschiedlicher Substrate, vorzugsweise von Papier, Pappe, Holz, Fasermaterialien (Nonwovens) und Kunststoffen wie Polymerfolien. Beispielsweise als Klebemittel im Baubereich, insbesondere in Fliesenklebern und Vollwärmeschutzklebemittel. Besonders geeignet sind die mit dem erfindungsgemäßen Verfahren erhaltenen wässrigen Polymerdispersionen für die Anwendung in emissionsarmen Kunststoffdispersionsfarben und Kunststoffdispersionsputzen.

### Beispiele;

### Herstellung einer wässrigen Polymerdispersion:

In einem 16 Liter Autoklaven wurden 2,06 kg Wasser, 200 g Genapol X 360 (Ethoxylierter Tridecylalkohol mit einem Ethoxylierungsgrad von 36; 25 %-ige wässrige Loesung); 5,74 g Natriumacetat, 229 g Texapon K 12(Natriumlaurylsulfat, 15 %-ige wässrige Lösung), 49,9 g Natriumvinylsulfonat und 624 g Vinylacetat vorgelegt. Es wurde mit 12 ml Ameisensäure auf pH 5 eingestellt und 10 ml Trilon B (EDTA) (2 %-ige wässrige Lösung) und 31 ml Eisenammonsulfat als 1 %-ige Lösung zugegeben. Der Kessel wurde auf 70°C aufgeheizt und es wurden 22 bar Ethylen aufgedrückt. Sobald sich der Reaktor im thermischen Gleichgewicht befand, wurde eine 5 %-ige Ammoniumpersulfatlösung mit 68 ml pro Stunde eingefahren, sowie eine 3.5 %-ige Natriumbisulfitlösung mit 85 ml pro Stunde. 25 Minuten später wurde begonnen Vinylacetat mit 863 g pro Stunde zu dosieren. Gleichzeitig wurde eine Dosierlösung eingefahren mit einer Dosierleistung von 445 g pro Stunde. Zusammensetzung der Dosierlösung: 1,06 kg Wasser, 1,04 kg Genapol X 360 (25 %-ige wässrige Lösung) 18,71 g Natriumacetat, 705 g Airvol 523 (Polyvinylalkohol mit einer Viskosität von 25 mPas (20°C, 4 %-ige Lösung, gemessen nach Höppler) und einem Hydrolysegrad von 88 Mol-%, 10 %-ige Loesung) und 31,82 g Vinyltrimethoxysilan. Die Gesamtdosierzeit für beide Dosierungen betrug 6,5 Stunden. 30 Minuten nach dem Ende der Dosierung von Vinylacetat und der Dosierlösung wurde eine Dosierung eingefahren mit der Zusammensetzung: 125 g Wasser, 2,94 g Genapol X 360 und 74,85 g Glycidylmethacrylat (GMA). Die Dosierzeit betrug 30 Minuten. Nach dem Ende der GMA-Dosierung wurde die APS- und Bisulfitdosierung noch 1 Stunde fortgesetzt. Nach dem Entspannen wurde die Dispersion zur Restmonomerminimierung gestrippt und anschliessend mit Hydorol W konserviert.
Es wurde eine Dispersion mit einem Feststoffgehalt von 54,8 % und einer MFT (Mindestfilmbildetemperatur) von 1°C erhalten.

### Testung der Reduktion des Formaldehyd-Gehalts in der Polymerdispersion:

Es wurden jeweils 2000 g der wässrigen Polymerdispersion mit 0,2 g (= 5 ppm 4-OH-TEMPO), 2 g (= 50 ppm 4-OH-TEMPO), 4 g (= 100 ppm 4-OH-TEMPO) und 20 g (= 500 ppm 4-OH-TEMPO) einer 5 %-igen wässrigen Lösung von 4-Hydroxy-2,2,6,6-tetramethylpiperidinyloxyl (4-OH-TEMPO) abgemischt und bei Normalbedingungen (23°C und 50 % Luftfeuchte) gelagert. Als Blindproben wurden jeweils 2000 g der wässrigen Polymerdispersion mit 0,2 g, 2 g, 4 g Wasser bzw. 20 g Wasser abgemischt und bei Normalbedingungen (23°C und 50 % Luftfeuchte) gelagert.

Nach jeweils 4 oder 6 Tagen, 49 oder 70 Tagen und 96 oder 104 Tagen wurden in den Testdispersion jeweils der Formaldehydgehalt in Gewichts-ppm bezogen auf das Gewicht der Polymerdispersion mittels der Acetylaceton-Methode nach VdL-RL 03 ("VdL-Richtlinie Formaldehydbestimmung", Ausgabe Mai 1997, Verband der Lackindustrie) bestimmt.

Die Ergebnisse der Testung sind in Tabelle 1 zusammengefasst.

**Tabelle 1:**

| | 4 oder 6 Tage [ppm] | 49 oder 70 Tage [ppm] | 96 oder 104 Tage [ppm] |
|---|---|---|---|
| 5 ppm 4-OH-TEMPO*) | 7 | 13 | 15 |
| Blindprobe 5 ppm*) | 12 | 14 | 16 |
| 50 ppm 4-OH-TEMPO*) | 7 | 7 | 7 |
| Blindprobe 50 ppm*) | 12 | 14 | 16 |
| 100 ppm 4-OH-TEMPO**) | 6 | 7 | 7 |
| Blindprobe 100 ppm**) | 14 | 18 | 21 |
| 500 ppm 4-OH-TEMPO**) | 6 | 7 | 7 |
| Blindprobe 500 ppm**) | 14 | 17 | 21 |

| | | | |
|---|---|---|---|
| *) Formaldehyd wurde nach 4 Tagen, nach 49 Tagen und nach 96 Tagen bestimmt. **) Formaldehyd wurde nach 6 Tagen, nach 70 Tagen und nach 104 Tagen bestimmt. | | | |

## Patentansprüche

1. Verfahren zur Reduktion des Gehalts an Formaldehyd in wässrigen Polymerdispersionen mit latent Formaldehyd freisetzenden Bestandteilen, **dadurch gekennzeichnet, dass** zu den wässrigen Polymerdispersionen ein oder mehrere N-Oxyl-Verbindungen zugegeben werden.

2. Verfahren nach Anspruch 1, **dadurch gekennzeichnet, dass** als latent Formaldehyd freisetzender Bestandteil ein Polymerisat enthalten ist, welches mittels Copolymerisation mit hydrolysierbaren Methoxysilangruppen enthaltenden Comonomeren erhalten wird.

3. Verfahren nach Anspruch 1, **dadurch gekennzeichnet, dass** als latent Formaldehyd freisetzender Bestandteil ein Polymerisat enthalten ist, welches mittels Copolymerisation mit ethylenisch ungesättigten, hydrolysierbaren Silanverbindungen der allgemeinen Formel RSi(CH₃)₀₋₂(OCH₃)₁₋₃, wobei R die Bedeutung CH₂=CR¹-(CH₂)₀₋₁ oder CH₂=CR¹CO₂(CH₂)₁-₃ hat, und R¹ für H oder CH₃ steht, erhalten wird.

4. Verfahren nach Anspruch 1 bis 3, **dadurch gekennzeichnet, dass** als latent Formaldehyd freisetzender Bestandteil Polyvinylalkohol in der wässrigen Polymerdispersion enthalten ist.

5. Verfahren nach Anspruch 1 bis 4, **dadurch gekennzeichnet, dass** als latent Formaldehyd freisetzender Bestandteil Emulgator mit Ethylenoxidgruppen in der wässrigen Polymerdispersion enthalten ist.

6. Verfahren nach Anspruch 1 bis 5, **dadurch gekennzeichnet, dass** als N-Oxyl-Verbindung 2,2,6,6-Tetramethylpiperidinyloxyl (TEMPO) und/oder 4-Hydroxy-2,2,6,6-tetramethylpiperidinyloxyl (4-OH-TEMPO)zugegeben wird.

7. Verfahren nach Anspruch 1 bis 6, **dadurch gekennzeichnet, dass** die N-Oxyl-Verbindung in einer Menge von 5 bis 1000 Gewichts-ppm, bezogen auf das Gewicht der Polymerdispersion, zugegeben wird.

8. Verfahren nach Anspruch 1 bis 7, **dadurch gekennzeichnet, dass** die Zugabe der N-Oxyl-Verbindung nach Abschluß der Polymerisation zur fertigen Polymerdispersion erfolgt, oder beim Abmischen der Polymerdispersion in Rezepturen für den beabsichtigten Verwendungszweck erfolgt.

9. Verfahren nach Anspruch 1 bis 8, **dadurch gekennzeichnet, dass** die wässrigen Polymerdispersionen Polymerisate enthalten, die mittels radikalisch initiierter Polymerisation in wässrigem Medium von einem oder mehreren ethylenisch ungesättigten Monomeren ausgewählt aus der Gruppe umfassend Vinylester von Carbonsäuren mit 1 bis 15 C-Atomen, Methacrylsäureester und Acrylsäureester von Carbonsäuren mit unverzweigten oder verzweigten Alkoholen mit 1 bis 15 C-Atomen, Olefine und Diene, Vinylaromaten und Vinylhalogenide erhalten werden.

10. Verfahren nach Anspruch 1 bis 8, **dadurch gekennzeichnet, dass** die wässrigen Polymerdispersionen ein oder mehrere Polymerisate enthalten, welche erhalten werden durch Polymerisation von Vinylacetat, von Vinylacetat und Ethylen, von Vinylacetat und Ethylen und einem oder mehreren weiteren Vinylestern, von Vinylacetat und einem oder mehreren weiteren Vinylestern, von Vinylacetat und Ethylen und (Meth)acrylsäureester, von Vinylacetat und Ethylen und Vinylchlorid, von Vinylacetat und einem oder mehreren weiteren Vinylestern und (Meth)acrylsäureester, von Vinylchlorid und Ethylen und gegebenenfalls einem oder mehreren weiteren Vinylestern, von Styrol und (Meth)acrylsäureester, wobei gegebenenfalls jeweils noch funktionalisierte Comonomere, gegebenenfalls auch Methoxysilan-funktionelle Comonomere copolymerisiert werden können.

11. Verfahren nach Anspruch 1 bis 8, **dadurch gekennzeichnet, dass** die wässrigen Polymerdispersionen ein oder mehrere Polymerisate enthalten, welche mittels Emulsionspolymerisation von 78 bis 95 Gew.-% Vinylacetat, 5 bis 20 Gew.-% Ethylen, 0,1 bis 1,0 Gew.-% von einem oder mehreren ethylenisch ungesättigten, hydrolysierbaren Silanverbindungen der allgemeinen Formel RSi(CH₃)₀₋₂(OCH₃)₁₋₃, wobei R die Bedeutung CH₂=CR¹-(CH₂)₀₋₁ oder CH₂=CR¹CO₂(CH₂)₁₋₃ hat, und R¹ für H oder CH₃ steht, und gegebenenfalls 0,1 bis 1,0 Gew.-% epoxidfunktionelle Comonomere , sowie gegebenenfalls weiterer funktioneller Comonomere, erhalten werden, wobei sich die Angaben in Gew.-% jeweils auf 100 Gew.-% aufaddieren, gegebenenfalls unter Berücksichtigung des Anteils an funktionellen Comonomeren.

12. Verfahren nach Anspruch 1 bis 8, **dadurch gekennzeichnet, dass** die wässrigen Polymerdispersionen ein oder mehrere Polymerisate enthalten, welche mittels Emulsionspolymerisation von 60 bis 100 Gew.-% Vinylacetat und 0 bis 40 Gew.-% Ethylen, sowie gegebenenfalls weiterer funktioneller Comonomere, gegebenenfalls auch Methoxysilan-funktioneller Comonomere, erhalten werden, und welche einen oder mehrere Polyvinylalkohole enthalten, gegebenenfalls in Kombination mit einem oder mehreren Emulgatoren.

13. Verfahren nach Anspruch 1 bis 8, **dadurch gekennzeichnet, dass** die wässrigen Polymerdispersionen ein oder mehrere Polymerisate enthalten, welche mittels Emulsionspolymerisation von 1 bis 60 Gew.-% Vinylchlorid, 1 bis 40 Gew.-% Ethylen, 1 bis 50 Gew.-% von einem oder mehreren weiteren Comonomeren aus der Gruppe der Vinylester mit 1 bis 12 C-Atomen im Carbonsäurerest, sowie gegebenenfalls weiterer funktioneller Comonomere, gegebenenfalls auch Methoxysilan-funktioneller Comonomere, erhalten werden, und welche einen oder mehrere Polyvinylalkohole enthalten, gegebenenfalls in Kombination mit einem oder mehreren Emulgatoren.

14. Verfahren nach Anspruch 1 bis 8, **dadurch gekennzeichnet, dass** die wässrigen Polymerdispersionen ein oder mehrere Polymerisate enthalten, welche mittels Emulsionspolymerisation von 1 bis 60 Gew.-% Vinylacetat und 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest, sowie gegebenenfalls weiterer funktioneller Comonomere, gegebenenfalls auch Methoxysilan-funktioneller Comonomere, erhalten werden, und welche einen oder mehrere Polyvinylalkohole enthalten, gegebenenfalls in Kombination mit einem oder mehreren Emulgatoren.

15. Verfahren nach Anspruch 1 bis 8, **dadurch gekennzeichnet, dass** die wässrigen Polymerdispersionen ein oder mehrere Polymerisate enthalten, welche mittels Emulsionspolymerisation von von 60 bis 100 Gew.-% Vinylacetat und 0 bis 40 Gew.-% Ethylen, sowie gegebenenfalls weiterer funktioneller Comonomere, gegebenenfalls auch Methoxysilan-funktionelle Comonomere, erhalten werden, und welche mindestens einen Emulgator mit Ethylenoxid-Einheiten enthalten, gegebenenfalls in Kombination mit einem oder mehreren Schutzkolloiden.

16. Verfahren nach Anspruch 1 bis 8, **dadurch gekennzeichnet, dass** die wässrigen Polymerdispersionen ein oder mehrere Polymerisate enthalten, welche mittels Emulsionspolymerisation von 1 bis 60 Gew.-% Vinylchlorid, 1 bis 40 Gew.-% Ethylen, 1 bis 50 Gew.-% von einem oder mehreren weiteren Comonomeren aus der Gruppe der Vinylester mit 1 bis 12 C-Atomen im Carbonsäurerest, sowie gegebenenfalls weiterer funktioneller Comonomere, gegebenenfalls auch Methoxysilan-funktioneller Comonomere, erhalten werden, und mindestens einen Emulgator mit Ethylenoxid-Einheiten enthalten, gegebenenfalls in Kombination mit einem oder mehreren Schutzkolloiden.

17. Verfahren nach Anspruch 1 bis 8, **dadurch gekennzeichnet, dass** die wässrigen Polymerdispersionen ein oder mehrere Polymerisate enthalten, welche mittels Emulsionspolymerisation von 1 bis 60 Gew.-% Vinylacetat und 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest, sowie gegebenenfalls weiterer funktioneller Comonomere, gegebenenfalls auch Methoxysilan-funktioneller Comonomere, erhalten werden, und mindestens einen Emulgator mit Ethylenoxid-Einheiten enthalten, gegebenenfalls in Kombination mit einem oder mehreren Schutzkolloiden.

18. Verfahren nach Anspruch 1 bis 8, **dadurch gekennzeichnet, dass** die wässrigen Polymerdispersionen ein oder mehrere Polymerisate enthalten, welche mittels Emulsionspolymerisation von 50 bis 100 Gew.-% eines oder mehrerer (Meth)-acrylsäurester und 0 bis 50 Gew.-% Styrol, sowie gegebenenfalls weiterer funktioneller Comonomere, gegebenenfalls auch Methoxysilan-funktioneller Comonomere erhalten werden, und mindestens einen Emulgator mit Ethylenoxid-Einheiten enthalten, gegebenenfalls in Kombination mit einem oder mehreren Schutzkolloiden, oder welche einen oder mehrere Polyvinylalkohole enthalten, gegebenenfalls in Kombination mit einem oder mehreren Emulgatoren.

19. Wässrige Polymerdispersionen mit latent Formaldehyd freisetzenden Bestandteilen, erhalten mit den Verfahren gemäß Anspruch 1 bis 18, **dadurch gekennzeichnet, dass** deren Formaldehydgehalt ≤ 20 Gewichts-ppm, bezogen auf das Gewicht der Polymerdispersion, beträgt.

20. Verwendung der wässrigen Polymerdispersionen erhalten nach Anspruch 1 bis 18 in Klebemitteln und Beschichtungsmitteln.

21. Verwendung der wässrigen Polymerdispersionen erhalten nach Anspruch 1 bis 18 in emissionsarmen Kunststoffdispersionsfarben und Kunststoffdispersionsputzen.

## Claims

1. Process for reducing the content of formaldehyde in aqueous polymer dispersions with constituents that are latent formaldehyde sources, **characterized in that** one or more N-oxyl compounds are added to the aqueous polymer dispersions.

2. Process according to Claim 1, **characterized in that** a polymer present as constituent that is a latent formaldehyde source is obtained by means of copolymerization with hydrolysable comonomers comprising methoxysilane groups.

3. Process according to Claim 1, **characterized in that** a polymer present as constituent that is a latent formaldehyde source is obtained by means of copolymerization with ethylenically unsaturated, hydrolysable silane compounds of the general formula RSi(CH₃)₀₋₂(OCH₃)₁₋₃, where R is CH₂=CR¹-(CH₂)₀₋₁ or CH₂=CR¹CO₂(CH₂)₁₋₃, and R¹ is H or CH₃.

4. Process according to any of Claims 1 to 3, **characterized in that** the aqueous polymer dispersion comprises polyvinyl alcohol as constituent that is a latent formaldehyde source.

5. Process according to any of Claims 1 to 4, **characterized in that** the aqueous polymer dispersion comprises emulsifier having ethylene oxide groups as constituent that is a latent formaldehyde source.

6. Process according to any of Claims 1 to 5, **characterized in that** 2,2,6,6-tetramethylpiperidinyloxyl (TEMPO) and/or 4-hydroxy-2,2,6,6-tetramethylpiperidinyloxyl (4-OH-TEMPO) is/are added as N-oxyl compound.

7. Process according to any of Claims 1 to 6, **characterized in that** the quantity added of the N-oxyl compound is from 5 to 1000 ppm by weight, based on the weight of the polymer dispersion.

8. Process according to any of Claims 1 to 7, **characterized in that** the N-oxyl compound is added after conclusion of polymerization to give the finished polymer dispersion, or is added during the mixing of the polymer dispersion into formulations for the intended use.

9. Process according to any of Claims 1 to 8, **characterized in that** the aqueous polymer dispersions comprise polymers which are obtained by means of free-radical-initiated polymerization in an aqueous medium of one or more ethylenically unsaturated monomers selected from the group comprising vinyl esters of carboxylic acids having from 1 to 15 carbon atoms, methacrylates and acrylates of carboxylic acids with unbranched or branched alcohols having from 1 to 15 carbon atoms, olefins and dienes, vinylaromatics and vinyl halides.

10. Process according to any of Claims 1 to 8, **characterized in that** the aqueous polymer dispersions comprise one or more polymers which are obtained via polymerization of vinyl acetate, of vinyl acetate and ethylene, of vinyl acetate and ethylene and one or more other vinyl esters, of vinyl acetate and one or more other vinyl esters, of vinyl acetate and ethylene and (meth)acrylate, of vinyl acetate and ethylene and vinyl chloride, of vinyl acetate and one or more other vinyl esters and (meth)acrylate, of vinyl chloride and ethylene and optionally one or more other vinyl esters, of styrene and (meth)acrylate, where in each case it is optionally also possible to copolymerize functionalized comonomers, optionally including methoxysilane-functional comonomers.

11. Process according to any of Claims 1 to 8, **characterized in that** the aqueous polymer dispersions comprise one or more polymers which are obtained by means of emulsion polymerization of from 78 to 95% by weight of vinyl acetate, from 5 to 20% by weight of ethylene, from 0.1 to 1.0% by weight of one or more ethylenically unsaturated, hydrolysable silane compounds of the general formula RSi(CH₃)₀₋₂(OCH₃)₁₋₃, where R is CH₂=CR¹-(CH₂)₀₋₁ or CH₂=CR¹CO₂(CH₂)₁-₃, and R¹ is H or CH₃, and optionally from 0.1 to 1.0% by weight of epoxy-functional comonomers, and also optionally other functional comonomers, where the % by weight data always give a total of 100% by weight, where appropriate after taking into account the content of functional comonomers.

12. Process according to any of Claims 1 to 8, **characterized in that** the aqueous polymer dispersions comprise one or more polymers which are obtained by means of emulsion polymerization of from 60 to 100% by weight of vinyl acetate and from 0 to 40% by weight of ethylene, and also optionally other functional comonomers, optionally including methoxysilane-functional comonomers, and which comprise one or more polyvinyl alcohols, optionally in combination with one or more emulsifiers.

13. Process according to any of Claims 1 to 8, **characterized in that** the aqueous polymer dispersions comprise one or more polymers which are obtained by means of emulsion polymerization of from 1 to 60% by weight of vinyl chloride, from 1 to 40% by weight of ethylene, from 1 to 50% by weight of one or more other comonomers from the group of the vinyl esters having from 1 to 12 carbon atoms in the carboxylic acid moiety, and also optionally other functional comonomers, optionally including methoxysilane-functional comonomers, and which comprise one or more polyvinyl alcohols, optionally in combination with one or more emulsifiers.

14. Process according to any of Claims 1 to 8, **characterized in that** the aqueous polymer dispersions comprise one or more polymers which are obtained by means of emulsion polymerization of from 1 to 60% by weight of vinyl acetate, from 1 to 40% by weight of ethylene, from 1 to 50% by weight of one or more other comonomers from the group of the vinyl esters having from 1 to 12 carbon atoms in the carboxylic acid moiety, and also optionally other functional comonomers, optionally including methoxysilane-functional comonomers, and which comprise one or more polyvinyl alcohols, optionally in combination with one or more emulsifiers.

15. Process according to any of Claims 1 to 8, **characterized in that** the aqueous polymer dispersions comprise one or more polymers which are obtained by means of emulsion polymerization of from 60 to 100% by weight of vinyl acetate and from 0 to 40% by weight of ethylene, and also optionally other functional comonomers, optionally including methoxysilane-functional comonomers, and which comprise at least one emulsifier having ethylene oxide units, optionally in combination with one or more protective colloids.

16. Process according to any of Claims 1 to 8, **characterized in that** the aqueous polymer dispersions comprise one or more polymers which are obtained by means of emulsion polymerization of from 1 to 60% by weight of vinyl chloride, from 1 to 40% by weight of ethylene, from 1 to 50% by weight of one or more other comonomers from the group of the vinyl esters having from 1 to 12 carbon atoms in the carboxylic acid moiety, and also optionally other functional comonomers, optionally including methoxysilane-functional comonomers, and which comprise at least one emulsifier having ethylene oxide units, optionally in combination with one or more protective colloids.

17. Process according to any of Claims 1 to 8, **characterized in that** the aqueous polymer dispersions comprise one or more polymers which are obtained by means of emulsion polymerization of from 1 to 60% by weight of vinyl acetate, from 1 to 40% by weight of ethylene, from 1 to 50% by weight of one or more other comonomers from the group of the vinyl esters having from 1 to 12 carbon atoms in the carboxylic acid moiety, and also optionally other functional comonomers, optionally including methoxysilane-functional comonomers, and which comprise at least one emulsifier having ethylene oxide units, optionally in combination with one or more protective colloids.

18. Process according to any of Claims 1 to 8, **characterized in that** the aqueous polymer dispersions comprise one or more polymers which are obtained by means of emulsion polymerization of from 50 to 100% by weight of one or more (meth)acrylates and from 0 to 50% by weight of styrene, and also optionally other functional comonomers, optionally including methoxysilane-functional comonomers, and comprise at least one emulsifier having ethylene oxide units, optionally in combination with one or more protective colloids, or which comprise one or more polyvinyl alcohols, optionally in combination with one or more emulsifiers.

19. Aqueous polymer dispersions with constituents that are latent formaldehyde sources, obtained by the processes according to any of Claims 1 to 18, **characterized in that** the formaldehyde content thereof is ≤ 20 ppm by weight, based on the weight of the polymer dispersion.

20. Use of the aqueous polymer dispersions obtained according to any of Claims 1 to 18 in adhesives and coating compositions.

21. Use of the aqueous polymer dispersions obtained according to any of Claims 1 to 18 in low-emission polymer-based emulsion paints and polymerdispersion renders.

## Revendications

1. Procédé de réduction de la teneur en formaldéhyde de dispersions polymères aqueuses contenant des constituants libérant du formaldéhyde de manière latente, **caractérisé en ce qu'**un ou plusieurs composés N-oxyle sont ajoutés aux dispersions polymères aqueuses.

2. Procédé selon la revendication 1, **caractérisé en ce qu'**un polymère qui est obtenu par copolymérisation avec des comonomères contenant des groupes méthoxysilane hydrolysables est contenu en tant que constituant libérant du formaldéhyde de manière latente.

3. Procédé selon la revendication 1, **caractérisé en ce qu'**un polymère qui est obtenu par copolymérisation avec des composés de silane hydrolysables éthyléniquement insaturés de formule générale RSi(CH₃)₀₋₂(OCH₃)₁₋₃, R signifiant CH₂=CR¹-(CH₂)₀₋₁ ou CH₂=CR¹CO₂(CH₂)₁₋₃, et R¹ représentant H ou CH₃, est contenu en tant que constituant libérant du formaldéhyde de manière latente.

4. Procédé selon les revendications 1 à 3, **caractérisé en ce qu'**un alcool polyvinylique est contenu dans la dispersion polymère aqueuse en tant que constituant libérant du formaldéhyde de manière latente.

5. Procédé selon les revendications 1 à 4, **caractérisé en ce qu'**un émulsifiant contenant des groupes oxyde d'éthylène est contenu dans la dispersion polymère aqueuse en tant que constituant libérant du formaldéhyde de manière latente.

6. Procédé selon les revendications 1 à 5, **caractérisé en ce que** le 2,2,6,6-tétraméthylpipéridinyloxyle (TEMPO) et/ou le 4-hydroxy-2,2,6,6-tétraméthylpipéridinyloxyle (4-OH-TEMPO) est ajouté en tant que composé N-oxyle.

7. Procédé selon les revendications 1 à 6, **caractérisé en ce que** le composé N-oxyle est ajouté en une quantité de 5 à 1 000 ppm en poids, par rapport au poids de la dispersion polymère.

8. Procédé selon les revendications 1 à 7, **caractérisé en ce que** l'ajout du composé N-oxyle a lieu après la fin de la polymérisation dans la dispersion polymère finie ou lors du mélange de la dispersion polymère dans des formulations pour l'utilisation prévue.

9. Procédé selon les revendications 1 à 8, **caractérisé en ce que** les dispersions polymères aqueuses contiennent des polymères qui sont obtenus par polymérisation initiée radicalairement dans un milieu aqueux d'un ou de plusieurs monomères éthyléniquement insaturés choisis dans le groupe comprenant les esters vinyliques d'acides carboxyliques de 1 à 15 atomes C, les esters de l'acide méthacrylique et les esters de l'acide acrylique d'acides carboxyliques avec des alcools non ramifiés ou ramifiés de 1 à 15 atomes C, les oléfines et les diènes, les composés aromatiques de vinyle et les halogénures de vinyle.

10. Procédé selon les revendications 1 à 8, **caractérisé en ce que** les dispersions polymères aqueuses contiennent un ou plusieurs polymères, qui sont obtenus par polymérisation d'acétate de vinyle, d'acétate de vinyle et d'éthylène, d'acétate de vinyle et d'éthylène et d'un ou de plusieurs esters de vinyle supplémentaires, d'acétate de vinyle et d'un ou de plusieurs esters de vinyle supplémentaires, d'acétate de vinyle et d'éthylène et d'esters de l'acide (méth)acrylique, d'acétate de vinyle et d'éthylène et de chlorure de vinyle, d'acétate de vinyle et d'un ou de plusieurs esters de vinyle supplémentaires et d'esters de l'acide (méth)acrylique, de chlorure de vinyle et d'éthylène et éventuellement d'un ou de plusieurs esters de vinyle supplémentaires, de styrène et d'esters de l'acide (méth)acrylique, des comonomères fonctionnalisés, éventuellement également des comonomères à fonction méthoxysilane, pouvant encore éventuellement être copolymérisés.

11. Procédé selon les revendications 1 à 8, **caractérisé en ce que** les dispersions polymères aqueuses contiennent un ou plusieurs polymères, qui sont obtenus par polymérisation en émulsion de 78 à 95 % en poids d'acétate de vinyle, 5 à 20 % en poids d'éthylène, 0,1 à 1,0 % en poids d'un ou de plusieurs composés de silane hydrolysables éthyléniquement insaturés de formule générale RSi (CH₃)₀₋₂(OCH₃)₁₋₃, R signifiant CH₂=CR¹-(CH₂)₀₋₁ ou CH₂=CR¹CO₂(CH₂)₁₋₃, et R¹ représentant H ou CH₃, et éventuellement 0,1 à 1,0 % en poids de comonomères à fonction époxyde, ainsi qu'éventuellement des comonomères fonctionnels supplémentaires, la somme des données en % en poids étant à chaque fois de 100 % en poids, éventuellement en prenant en compte la proportion de comonomères fonctionnels.

12. Procédé selon les revendications 1 à 8, **caractérisé en ce que** les dispersions polymères aqueuses contiennent un ou plusieurs polymères, qui sont obtenus par polymérisation en émulsion de 60 à 100 % en poids d'acétate de vinyle et 0 à 40 % en poids d'éthylène, ainsi qu'éventuellement de comonomères fonctionnels supplémentaires, éventuellement également de comonomères à fonction méthoxysilane, et qui contiennent un ou plusieurs alcools polyvinyliques, éventuellement en combinaison avec un ou plusieurs émulsifiants.

13. Procédé selon les revendications 1 à 8, **caractérisé en ce que** les dispersions polymères aqueuses contiennent un ou plusieurs polymères, qui sont obtenus par polymérisation en émulsion de 1 à 60 % en poids de chlorure de vinyle, 1 à 40 % en poids d'éthylène, 1 à 50 % en poids d'un ou de plusieurs comonomères supplémentaires du groupe constitué par les esters de vinyle contenant 1 à 12 atomes C dans le radical acide carboxylique, ainsi qu'éventuellement des comonomères fonctionnels supplémentaires, éventuellement également des comonomères à fonction méthoxysilane, et qui contiennent un ou plusieurs alcools polyvinyliques, éventuellement en combinaison avec un ou plusieurs émulsifiants.

14. Procédé selon les revendications 1 à 8, **caractérisé en ce que** les dispersions polymères aqueuses contiennent un ou plusieurs polymères, qui sont obtenus par polymérisation en émulsion de 1 à 60 % en poids d'acétate de vinyle et 1 à 40 % en poids d'éthylène et 1 à 50 % en poids d'un ou de plusieurs comonomères supplémentaires du groupe constitué par les esters de vinyle contenant 1 à 12 atomes C dans le radical acide carboxylique, ainsi qu'éventuellement des comonomères fonctionnels supplémentaires, éventuellement également des comonomères à fonction méthoxysilane, et qui contiennent un ou plusieurs alcools polyvinyliques, éventuellement en combinaison avec un ou plusieurs émulsifiants.

15. Procédé selon les revendications 1 à 8, **caractérisé en ce que** les dispersions polymères aqueuses contiennent un ou plusieurs polymères, qui sont obtenus par polymérisation en émulsion de 60 à 100 % en poids d'acétate de vinyle et 0 à 40 % en poids d'éthylène, ainsi qu'éventuellement des comonomères fonctionnels supplémentaires, éventuellement également des comonomères à fonction méthoxysilane, et qui contiennent au moins un émulsifiant contenant des unités oxyde d'éthylène, éventuellement en combinaison avec un ou plusieurs colloïdes protecteurs.

16. Procédé selon les revendications 1 à 8, **caractérisé en ce que** les dispersions polymères aqueuses contiennent un ou plusieurs polymères, qui sont obtenus par polymérisation en émulsion de 1 à 60 % en poids de chlorure de vinyle, 1 à 40 % en poids d'éthylène, 1 à 50 % en poids d'un ou de plusieurs comonomères supplémentaires du groupe constitué par les esters de vinyle contenant 1 à 12 atomes C dans le radical acide carboxylique, ainsi qu'éventuellement des comonomères fonctionnels supplémentaires, éventuellement également des comonomères à fonction méthoxysilane, et qui contiennent au moins un émulsifiant contenant des unités oxyde d'éthylène, éventuellement en combinaison avec un ou plusieurs colloïdes protecteurs.

17. Procédé selon les revendications 1 à 8, **caractérisé en ce que** les dispersions polymères aqueuses contiennent un ou plusieurs polymères, qui sont obtenus par polymérisation en émulsion de 1 à 60 % en poids d'acétate de vinyle et 1 à 40 % en poids d'éthylène et 1 à 50 % en poids d'un ou de plusieurs comonomères supplémentaires du groupe constitué par les esters de vinyle contenant 1 à 12 atomes C dans le radical acide carboxylique, ainsi qu'éventuellement des comonomères fonctionnels supplémentaires, éventuellement également des comonomères à fonction méthoxysilane, et qui contiennent au moins un émulsifiant contenant des unités oxyde d'éthylène, éventuellement en combinaison avec un ou plusieurs colloïdes protecteurs.

18. Procédé selon les revendications 1 à 8, **caractérisé en ce que** les dispersions polymères aqueuses contiennent un ou plusieurs polymères, qui sont obtenus par polymérisation en émulsion de 50 à 100 % en poids d'un ou de plusieurs esters de l'acide (méth) acrylique et 0 à 50 % en poids de styrène, ainsi qu'éventuellement des comonomères fonctionnels supplémentaires, éventuellement également des comonomères à fonction méthoxysilane, et qui contiennent au moins un émulsifiant contenant des unités oxyde d'éthylène, éventuellement en combinaison avec un ou plusieurs colloïdes protecteurs, ou qui contiennent un ou plusieurs alcools polyvinyliques, éventuellement en combinaison avec un ou plusieurs émulsifiants.

19. Dispersions polymères aqueuses contenant des constituants libérant du formaldéhyde de manière latente, obtenues par le procédé selon les revendications 1 à 18, **caractérisées en ce que** leur teneur en formaldéhyde est ≤ 20 ppm en poids, par rapport au poids de la dispersion polymère.

20. Utilisation des dispersions polymères aqueuses obtenues selon les revendications 1 à 18 dans des agents adhésifs et des agents de revêtement.

21. Utilisation des dispersions polymères aqueuses obtenues selon les revendications 1 à 18 dans des peintures en émulsion synthétiques et des enduits en émulsion synthétiques à faibles émissions.
